# EUROPÄISCHE PATENTANMELDUNG

(11) **EP 2 999 088 A1**
(43) Veröffentlichungstag der Anmeldung: **23.03.2016**
(21) Anmeldenummer: 14185615.3
(22) Anmeldetag: 19.09.2014
(51) Int. Cl.: H02K 1/02, H02K 1/14, H02K 1/24

(54) **Streuungsarmer Polschuh für eine elektrische Maschine**

(71) Anmelder: Siemens Aktiengesellschaft, 80333 München (DE)
(72) Erfinder: Fischer, Ralf, 90419 Nürnberg (DE); Klöpzig, Markus, 91320 Ebermannstadt (DE)

(57) **Zusammenfassung**

Die Erfindung betrifft ein Aktivteil (10) für eine elektrische Maschine (E), wobei das Aktivteil (10) als Stator oder Läufer (10) ausgestaltet ist und zumindest zwei Nuten (14) zum Anordnen von elektrischen Spulenwicklungen (16) und zwischen benachbarten Nuten (14) jeweils einen Steg (22) aufweist, wobei an dem Steg (22) ein Polschuh (24) zum Führen eines magnetischen Flusses (30) zwischen dem Steg (22) und einem Luftspalt (L) der elektrischen Maschine (E) angeordnet ist. Aufgabe der Erfindung ist es, die elektrische Maschine mit einem hohen Wirkungsgrad auszustatten. Hierzu weist der Polschuh (24) zum Führen des magnetischen Flusses (30) ein Material (34) auf, das zumindest bereichsweise eine magnetische Anisotropie mit einer leichten Achse (38) und einer schweren Achse der Magnetisierbarkeit aufweist. Die leichte Achse (38) ist parallel oder zumindest in einem Winkel von weniger als 25° zu einer Spulenachse (M) der Spulenwicklungen (16) ausgerichtet.

## Beschreibung

Die Erfindung betrifft ein Aktivteil für eine elektrische Maschine, das als Stator oder Läufer ausgestaltet sein kann. Das Aktivteil weist Nuten zum Anordnen von Spulenwicklungen elektrischer Spulen auf. Zwischen benachbarten Nuten ist jeweils ein Steg ausgebildet, um welchen die Spulenwicklungen herumgeführt sind. Zum Führen eines magnetischen Flusses ist auf jedem Steg ein Polschuh angeordnet. Zu der Erfindung gehört auch eine elektrische Maschine mit einem erfindungsgemäßen Aktivteil als Stator und/oder Läufer sowie ein Verfahren zum Herstellen eines erfindungsgemäßen Aktivteils.

Unter einem Aktivteil wird im Zusammenhang mit der Erfindung ein weichmagnetisches Bauteil einer elektrischen Maschine verstanden, mittels welchem ein magnetischer Fluss durch die in den Nuten angeordneten Spulenwicklungen hindurchgeführt werden kann, um einen magnetischen Kreis der elektrischen Maschine zu schließen. Beispielsweise können elektrisch erregte Synchronmaschinen in Schenkelpolausführung am Umfang ihres Rotors mehrere ausgeprägte Pole aufweisen, die von einer Wicklung umschlossen werden und einen zum Luftspalt hin sich meist verdickenden Kopf, den sogenannten Polschuh, aufweisen. Die von den Wicklungen umschlossenen Pole stellen die beschriebenen Stege dar.

Zwischen den einzelnen Polschuhen, das heißt im Falle der Schenkelpolmaschine den Schenkelpolen, befindet sich konstruktionsbedingt eine Lücke aus Luft, die nicht mit ferromagnetischem Material ausgefüllt ist. In dieser Pollücke können sich Streufelder ausbilden, die nicht zur Drehmomenterzeugung der Synchronmaschine im Motorbetrieb oder zur Spannungserzeugung im Generatorbetrieb beitragen. Je geringer ein Streufluss des magnetischen Kreises ist, desto effizienter lässt sich die elektrische Maschine betreiben.

Aus der UK 1 114 562 ist ein Rotor für eine Reluktanzmaschine bekannt, der keine eigene magnetische Erregung, dafür aber Flussführungspfade zwischen magnetischen Polen des Rotors aufweist. Zur Verbesserung der Flussführung ist der Rotor laminiert ausgestaltet, wodurch sich eine magnetische Anisotropie ergibt, deren Vorzugsrichtung oder leichte Achse in der Ebene der Laminierungsschichten und deren schwere Achse quer zur Erstreckungsrichtung der Laminierungsschichten verläuft. Anders als bei einem herkömmlichen Rotor mit geblechtem Rotorkörper verlaufen die Laminierungsschichten also nicht senkrecht zur Rotationsachse, sondern entlang oder parallel zur Rotationsachse des Rotors.

Aus der JP 4343281 B2 ist ein Reluktanzrotor bekannt, bei dem die Flussführungspfade nicht durch eine Laminierung des weichmagnetischen Rotorkörpers ausgebildet ist, sondern durch eine mikrokristalline Anisotropie des Eisenkörpers.

Der Erfindung liegt die Aufgabe zugrunde, eine elektrische Maschine Mittel zur Verbesserung des Wirkungsgrads bereitzustellen.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Erfindungsgemäß ist ein Aktivteil für eine elektrische Maschine bereitgestellt, wobei das Aktivteil als Stator oder Läufer ausgestaltet ist. Für den Fall, dass es sich bei der elektrischen Maschine um eine Rotationsmaschine handelt, ist das Aktivteil also als Stator oder Rotor der Rotationsmaschine ausgestaltet.

Das Aktivteil weist zumindest zwei Nuten zum Anordnen von elektrischen Spulenwicklungen einer elektrischen Spule der elektrischen Maschine auf. Zwischen benachbarten Nuten ist jeweils ein Steg bereitgestellt, welcher die Wandungen der Nuten bilden oder darstellen kann. An jedem Steg ist jeweils in an sich bekannter Weise ein Polschuh zum Führen eines magnetischen Flusses zwischen dem Steg und einem Luftspalt der elektrischen Maschine angeordnet.

Zum Führen des magnetischen Flusses weist der Polschuh erfindungsgemäß ein Material auf, das zumindest bereichsweise eine magnetische Anisotropie mit einer leichten Achse und einer schweren Achse der Magnetisierbarkeit aufweist. Eine andere Bezeichnung für leichte Achse ist auch Vorzugsrichtung. Mit anderen Worten weist der Polschuh ein Material auf, dessen relative Permeabilität einen richtungsabhängigen Wert aufweist. Die leichte Achse ist bei dem erfindungsgemäßen Aktivteil parallel oder zumindest in einem Winkel von weniger als 25°, insbesondere weniger als 15°, zu Spulenachse der Spule, die in den benachbarten Nuten angeordnet ist, ausgerichtet.

Durch die Erfindung ergibt sich der Vorteil, dass ein Streufluss quer zur Spulenachse, das heißt ein Streufluss in einer Ebene parallel zur Wicklungsebene der Spule, durch die Ausrichtung der leichten Achse verringert wird.

Unter dem Begriff Nuten ist bei der Erfindung allgemein derjenige Bereich zu verstehen, in welchem die Spulenwicklungen angeordnet sind. Insbesondere ist von der Erfindung auch eine Ausführungsform erfasst, bei welcher die Nuten jeweils den Zwischenbereich zwischen zwei benachbarten Stegen darstellen. Eine Nut im Sinne der Erfindung ergibt sich somit auch zwischen zwei Schenkelpolen einer Außenpolmaschine oder einer Innenpolmaschine. Schenkelpole müssen besonders breit ausgestaltet sein, um einen mechanischen Halt für die Spulenwicklungen zu bilden. Hierdurch sind die Pollücken besonders klein, so dass ein Übertritt eines Streuflusses zwischen den Schenkelpolen besonders wahrscheinlich ist. Hier ist die Anisotropie besonders wirkungsvoll.

Die magnetische Anisotropie kann als magnetokristalline Anisotropie bereitgestellt werden.

In einer Ausführungsform ist die schwere Achse mit dem kleinsten Wert der relativen Permeabilität senkrecht zur leichten Achse ausgerichtet. Dies kann durch eine entsprechende Materialwahl des anisotropen Materials erreicht werden. Eine schwere Achse senkrecht zur leichten Achse weist den Vorteil auf, dass ein Anteil des Streuflusses, der von einem Polschuh zu einem benachbarten Polschuh des Aktivteils übertritt, noch weiter reduziert werden kann.

In einer Ausführungsform weist jeder Polschuh jeweils zwei Überstände auf, von denen jeder eine der Nuten überragt. Mit anderen Worten ist der Polschuh als sich verdickender Kopf auf dem Steg angeordnet. Das beschriebene Material mit der magnetischen Anisotropie ist vollständig oder zumindest anteilig in den Überständen angeordnet. Hierdurch ergibt sich der Vorteil, dass das Führen des magnetischen Flusses mittels der Anisotropie insbesondere in demjenigen Bereich, nämlich den Überständen, erfolgt, die den geringsten Abstand zum benachbarten Polschuh aufweisen und daher den größten Beitrag zur Streuflussbildung leisten.

In einer Ausführungsform ist das Material im ganzen Polschuh verteilt angeordnet. Hierdurch kann bei einer Bewegung des Aktivteils in der elektrischen Maschine ein Pendeln des magnetischen Flusses gedämpft oder unterdrückt werden.

In einer Ausführungsform der Erfindung ist durch den Steg eine jeweilige Nutenwand der angrenzenden Nuten gebildet und ein Teil des Materials in jeder Nutenwand angeordnet. Mit anderen Worten sind die Nuten mit dem Material ausgekleidet. Hierdurch ergibt sich der Vorteil, dass eine vergrößerte magnetische Flussdichte innerhalb des Schenkels ermöglicht ist, ohne dass ein Streufluss aus dem Steg heraus in die Spulenwicklungen gelangt.

Bevorzugt weist das Material nur eine einzige leichte Achse auf. Dies ist wieder durch eine entsprechende Wahl des Materials möglich. Mit nur einer leichten Achse ist vorteilhafterweise vermieden, dass der magnetische Fluss seine Richtung durch Wechseln zwischen mehreren leichten Achsen ändert.

Als besonders geeignet hat es sich erwiesen, wenn eine relative magnetische Permeabilität des Materials entlang der leichten Achse einen Wert größer als 15, insbesondere größer als 20, und entlang der schweren Achse einen Wert kleiner als 2, insbesondere kleiner als 1,6 aufweist. Hierdurch kann die feldführende Eigenschaft des Pohlschuhs einerseits mit der Unterdrückung des Streufeldes besonders gut kombiniert werden. Um die beschriebenen magnetischen Eigenschaften zu erhalten, sind als Parameter bei der Herstellung des Pohlschuhs die Legierung, der Temperprozess beim Ausgestalten des Pohlschuhs sowie das Magnetfeld, mit welchem die Anisotropie eingeprägt wird, verfügbar. Einfache Versuche ermöglichen hier das Parametrieren des Herstellungsprozesses, um die beschriebenen Werte für die relative magnetische Permeabilität zu erhalten.

Besonders geeignet ist ein Material, welches eine magnetische Sättigung bei einer Flussdichte von mehr als 0,8 Tesla, insbesondere bei mindestens 1,0 Tesla aufweist. Hierdurch ergibt sich der Vorteil, dass der magnetische Fluss zum Antrieb des Läufers effizient genutzt werden kann.

Um sämtliche beschriebenen magnetischen Eigenschaften zu realisieren, sieht eine Ausführungsform der Erfindung vor, dass das Material Neodym-Eisen-Bor, NdFeB, aufweist. Dieses Material ist in Legierungen erhältlich, bei welchen die relative magnetische Permeabilität auf die beschriebenen Werte eingestellt werden kann und durch eine Koerzitivfeldstärke von weniger als zehn Kiloampere pro Meter die beschriebenen feldführenden Eigenschaften im Läuferkörper ausgebildet werden können. Das Material ist also kein Permanentmagnet, sondern weist insbesondere flussführende Eigenschaften auf.

Wie bereits ausgeführt, gehört zu der Erfindung auch eine elektrische Maschine mit einem Stator mit Magnetspulen und mit einem Läufer, wobei erfindungsgemäß der Stator und/oder der Läufer jeweils ein Aktivteil aufweist, das eine Ausführungsform des erfindungsgemäßen Aktivteils darstellt.

Insbesondere handelt es sich bei dem in der elektrischen Maschine bereitgestellten Aktivteil um ein solches, mittels welchem eine magnetische Erregung in der Maschine erzeugt wird, also mittels des jeweiligen Aktivteils und mittels der in den Nuten des Aktivteils angeordneten Spulenwicklung elektrisch die magnetische Erregung für die Maschine erzeugt wird. In Stegen und Polschuhen, die von einer elektrisch erregten Spulenwicklung umgeben sind, ist der magnetische Fluss besonders groß, so dass hier die Verwendung eines anisotropen Materials besonders vorteilhaft ist. Im Unterschied hierzu kann im Generatorbetrieb eine passiv durchflutete Spule vorteilsbringend einen weichmagnetischen Polschuh ohne magnetische Anisotropie aufweisen, um hierdurch einen möglichst großen Anteil des Flusses mittels des Polschuhs einzufangen und durch die Generatorspule zu führen.

Zu der Erfindung gehört auch ein Verfahren zum Herstellen des Aktivteils gemäß der Erfindung. Das Verfahren umfasst die Schritte des Ausbildens von Nuten zum Anordnen von Spulenwicklungen und des Ausbildens jeweils eines Stegs zwischen benachbarten Nuten. Auf jeden Steg wird jeweils ein Polschuh angeordnet. In einem Material dieses Polschuhs wird jeweils eine magnetische Anisotropie bereitgestellt, wobei bei jedem Polschuh eine leichte Achse der Anisotropie parallel oder zumindest in einem Winkel von weniger als 25°, insbesondere weniger als 15°, zu einer Wicklungsebene der in den jeweils angrenzenden Nuten anzuordnenden Spulenwicklungen ausgerichtet wird.

Zum Ausrichten der leichten Achse wird gemäß einer Weiterbildung des Verfahrens der Polschuh oder zumindest zwei Überstände des Polschuhs aus einem Rohling gebildet, der eine vorbestimmte magnetische Anisotropie aufweist. Beispielsweise können also die Überstände oder der Polschuh aus dem Rohling herausgeschnitten oder herausgesägt oder durch ein anderes spanendes Verfahren abgetrennt werden. Hierdurch ergibt sich der Vorteil, dass fertige Rohlinge in die gewünschte Form gebracht werden können, wobei die Rohlinge bereits eine bekannte vorbestimmte magnetische Anisotropie aufweisen können.

Eine andere Ausführungsform des Verfahrens sieht vor, dass zum Ausrichten der leichten Achse die Anisotropie in das Material von außen magnetisch eingeprägt wird. Hierdurch ergibt sich der Vorteil, dass auch ein gekrümmter Verlauf der Anisotropie durch entsprechendes Erzeugen eines gekrümmten Magnetfelds erreicht werden kann.

In einer Ausführungsform wird der Polschuh oder zumindest die Überstände des Polschuhs durch Pressen eines Pulvers und/oder Granulats ausgebildet. Das Pulver und/oder Granulat weist jeweils das Material auf. Während des Pressens wird gleichzeitig das Pulver und/oder Granulat mit einem Magnetfeld beaufschlagt. Hierdurch wird während des Pressens die Anisotropie in das Material eingeprägt. Diese Ausführungsform weist den Vorteil auf, dass der Polschuh oder die Überstände eine frei mittels der entsprechenden Pressform vorgebbare Gestalt aufweisen können.

Im Folgenden sind Ausführungsbeispiele der Erfindung beschrieben. Hierzu zeigt:
- FIG 1: eine schematische Darstellung eines Längsschnitts durch eine Ausführungsform der erfindungsgemäßen Maschine,
- FIG 2: eine schematische Darstellung eines Querschnitts durch einen Läufer der elektrischen Maschine von FIG 1, wobei der Läufer als erfindungsgemäßes Aktivteil ausgestaltet ist,
- FIG 3: eine schematische Darstellung eines Querschnitts durch einen Schenkelpol für ein Aktivteil gemäß der Erfindung,
- FIG 4: eine schematische Darstellung eines Querschnitts durch einen Schenkelpol gemäß einer anderen Ausführungsform der Erfindung und
- FIG 5: eine schematische Darstellung eines Querschnitts durch einen Schenkelpol gemäß einer weiteren Ausführungsform der Erfindung.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

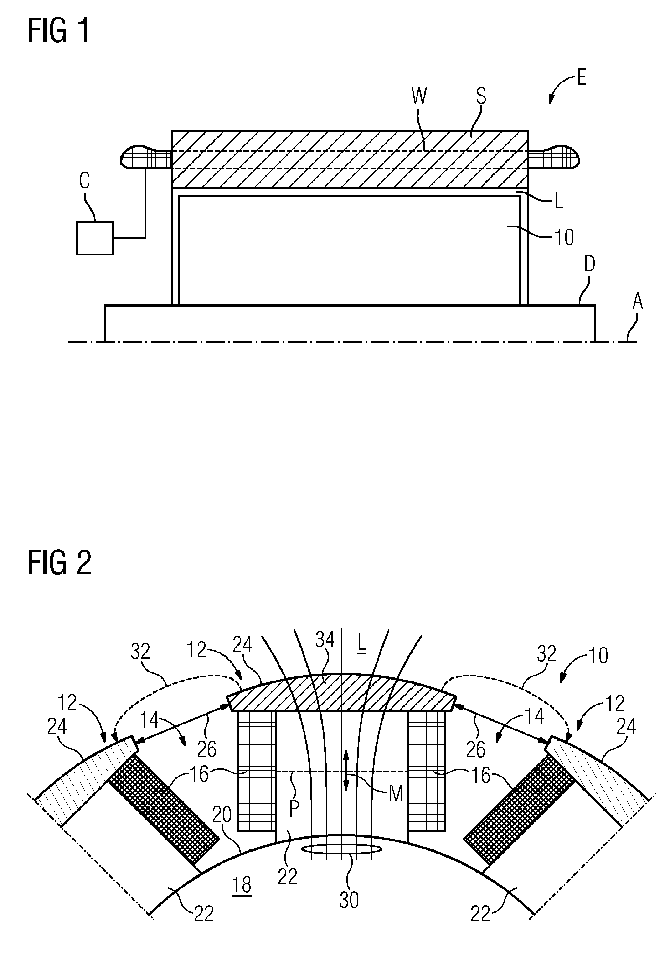

In FIG 1 ist eine elektrische Maschine E im Längsschnitt gezeigt, bei der es sich z.B. um einen Synchronmotor handeln kann. In FIG 1 stellt eine Rotationsachse A auch eine Symmetrieachse der Darstellung dar. Die elektrische Maschine E umfasst einen Stator S, in welchem Wicklungen elektrischer Spulen W angeordnet sind, wobei in FIG 1 nur eine der Spulen dargestellt ist. Die Spulen W können durch ein Drehstromquelle C abwechselnd bestromt werden, wodurch im Inneren des Stators S ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz. Die elektrische Maschine E kann auch als Generator ausgestaltet sein, wobei die Drehstromquelle C entfallen oder durch einen Gleichrichter ersetzt sein kann.

Im Inneren des Stators S kann sich ein Rotor 10 befinden, der drehfest mit einer Welle D verbunden sein kann. Die Welle D ist um die Rotationsachse A drehbar in dem Stator S gelagert. Der Rotor 10 ist ein Läufer der elektrischen Maschine E. Der Rotor 10 kann eine Ausführungsform des erfindungsgemäßen Aktivteils sein. Auch der Stator S kann eine Ausführungsform des erfindungsgemäßen Aktivteils sein. Im Folgenden werden Ausführungsbeispiele für die Erfindung anhand des Rotors 10 erläutert. Diese Erläuterungen treffen auch für entsprechende Ausgestaltungen eines erfindungsgemäßen Stators und eines erfindungsgemäßen Linearläufers zu.

Der Rotor 10 kann Schenkelpole 12 aufweisen, zwischen denen sich Nuten 14 ergeben. In den Nuten 14 können Spulenwicklungen 16 angeordnet sein. Jeder Schenkelpol 12 kann dabei von den Spulenwicklungen 16 einer elektrischen Spule W umwickelt oder umgeben sein. Die Schenkelpole 12 können an einem Rotorkörper 18 entlang dessen Außenumfang 20 angeordnet sein. Jeder Schenkelpol 12 kann einen Steg 22 aus einem weichmagnetischen, insbesondere ferromagnetischen, Material aufweisen.

Durch eine Anordnung der Spulenwicklungen 16 ergibt sich eine Wicklungsebene P, die sich senkrecht zur Zeichnungsebene von FIG 2 erstreckt. Senkrecht auf der Wicklungsebene P steht die Spulenachse M. Die Wicklungsebene P ist tangential zum Außenumfang 20 angeordnet. Die Spulenachse M ist radial zur Rotationsachse A ausgerichtet.

An dem Steg 22 kann in an sich bekannter Weise ein Polschuh 24 angeordnet sein, welcher den Steg 22 zum Luftspalt L und zum (in FIG 2 nicht dargestellten) Stator S hin abgrenzen kann. Zwischen den Polschuhen 24 ergeben sich durch deren Abstand zwischen jeweils benachbarten Polschuhen 24 Pollücken 26.

Bei den Spulenwicklungen 16 kann es sich um Erregerspulen handeln, die in den Schenkelpolen 12 jeweils einen magnetischen Fluss 30 einprägen können. Der magnetische Fluss 30 soll idealerweise mittels des Polschuhs 24 des jeweiligen Schenkelpols 12 zum Luftspalt L hin derart ausgerichtet sein, dass ein möglichst großer Anteil des magnetischen Flusses 30 zum Stator S hin übertritt. Es soll also vermieden werden, dass ein Streufluss 32 zwischen den benachbarten Polschuhen 24 im Luftspalt L von einem Polschuh 24 zum anderen Polschuh 24 übertritt, ohne hierbei den Stator S durchdrungen zu haben.

Bei der elektrischen Maschine E kann hierzu in den Polschuhen 24 ein magnetisch anisotropes Material 34 bereitgestellt sein. Das Vorhandensein des Materials ist in FIG 2 bis FIG 5 jeweils durch eine Schraffur angedeutet, welche die Region, in welcher sich das Material befinden kann, veranschaulicht.

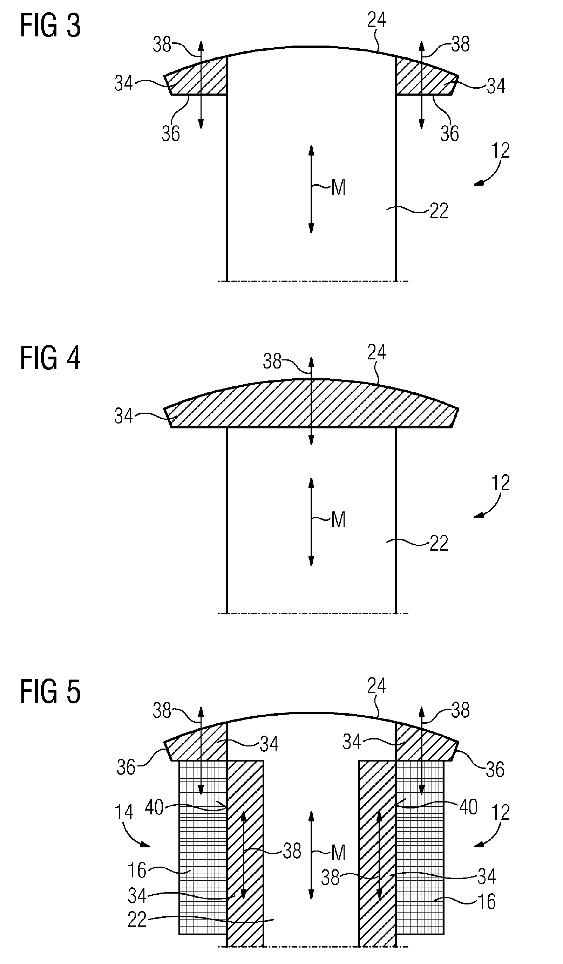

In FIG 3 ist gezeigt, wie das Material 34 in Überhängen oder Überständen 36 des Polschuhs 24 angeordnet sein kann. Die Überstände 36 des Polschuhs 24 können zum einen die Spulenwicklungen 16 gegen Zentrifugalkräfte stützen oder halten. Zum anderen kann durch die Überstände 36 der magnetische Fluss 30 im Luftspalt L gezielt verteilt werden, um eine Welligkeit eines von der elektrischen Maschine E erzeugten Drehmoments zu verringern. Das magnetisch anisotrope Material 34 weist eine magnetische Vorzugsrichtung oder leichte Achse 38 auf, entlang welcher eine relative magnetische Permeabilität am geringsten ist. Bevorzugt beträgt die relative Permeabilität entlang der leichten Achse 38 mindestens 15, insbesondere mindestens 20. Bei dem Material 34 kann eine schwere Achse, entlang welcher die relative Permeabilität am geringsten ist, senkrecht zur leichten Achse 38 ausgerichtet sein. Entlang der schweren Achse beträgt die Permeabilität bevorzugt weniger als 2, insbesondere weniger als 1,6.

Die leichte Achse 38 ist bevorzugt parallel zur Spulenachse M angeordnet. Die leichte Achse 38 und die Spulenachse M können auch einen Winkel von bis zu 25 Grad einschließen. Durch den Winkel kann eine Verteilung des magnetischen Flusses 30 im Luftspalt L gesteuert werden. Wenn die schwere Achse senkrecht zur leichten Achse 38 ausgerichtet ist, kann der magnetische Fluss 30 nur in verringertem Maße als Streufluss 32 hin zu einem benachbarten Polschuh 24 gekrümmt werden. Hierdurch verringert sich der Anteil des Streuflusses 32 bei einer elektrischen Maschine E.

In FIG 4 ist ein Schenkelpol 12 gezeigt, bei welchem das Material 34 im ganzen Polschuh 24 verteilt angeordnet ist. Eine leichte Achse 38 des Materials 34 ist wieder bevorzugt parallel, zumindest aber in einem Winkel von weniger als 25 Grad zur Spulenachse M angeordnet.

Hierdurch ist vorteilhafterweise vermieden, dass der magnetische Fluss 30, das heißt die Flusskonzentration entlang der senkrecht zur leichten Achse 38 ausgerichteten schweren Achse im Polschuh 24 bei einer Rotation des Rotors 10 pendelt. Dies verringert eine Welligkeit des zeitlichen Verlaufs des Drehmoments.

In FIG 5 ist ein Polschuh 12 gezeigt, bei welchem eine Nutenwandung oder Nutenwand 40 des Stegs 22 das Material 34 aufweist. Zusätzlich kann der gesamte Polschuh 24 oder, wie in FIG 5 gezeigt, der jeweilige Überstand 36 das Material 34 aufweisen. Die leichten Achsen 38 können jeweils parallel zur Spulenachse M der durch die Spulenwicklungen 16 um den Steg 22 gebildeten Spule ausgerichtet sein. Zumindest ist ein Winkel von höchstens 25 Grad durch die jeweilige leichte Achse 38 und die Spulenachse M eingeschlossen. Durch das Material 38 in der Nutenwandung 40 ergibt sich der Vorteil, dass der magnetische Fluss zu einem geringeren Teil aus dem Steg 22 in die Spulenwicklungen 16 austritt.

Durch die Verwendung von anisotropem weichmagnetischen Material (awM) können somit Streufelder reduziert werden, da die zentrale Eigenschaft des Materials darin besteht, in eine Richtung (leichte Achse) eine vergleichsweise gute magnetische Permeabilität und gleichzeitig in die dazu orthogonalen Richtungen (schwere Achse) eine magnetische Permeabilität vergleichbar der von Luft aufweist. Dadurch wird der magnetische Fluss 30 im Bereich der Polschuhe 24 besser in radialer Richtung kanalisiert und es bilden sich weniger oder bevorzugt gar keine Streufelder aus, was die Ausnutzung der elektrischen Maschine E verbessert.

Die Verwendung von anisotropem weichmagnetischen Material beim Bau von elektrisch erregten Synchronmaschinen verbessert die magnetische Ausnutzung der elektrischen Maschine besonders, was zu einem geringerem Strombedarf führt, um das gleiche Drehmoment zu erzeugen als bei konventionell gefertigten Maschinen, die lediglich weichmagnetisches Material für die Polschuhe verwenden.

Die anisotropen weichmagnetischen Materialien stellen für den magnetischen Fluss eine Art Kanal dar, der nur in die Richtung einer Achse leicht passierbar ist. Bei einem Rotor ist dies die radiale oder diametrale Richtung im Querschnitt. Für Streuflüsse, die sich in eine andere Richtung auszubreiten versuchen, stellen diese Materialien einen erhöhten magnetischen Widerstand (Reluktanz) dar. Zusätzlich zur Reduktion der Streuflüsse bieten die anisotropen weichmagnetischen Materialien den Vorteil, dass die Flussführung innerhalb des Materials vorgegeben ist und demzufolge der Fluss räumlich fixiert ist. Im Vergleich zu isotrop ausgeführten Polschuhen können Effekte, die durch ein Pendeln des Flusses entstehen, deutlich reduziert werden.

Neben der Ausführung, bei welcher der komplette Polschuh aus awM zu fertigen ist (FIG 4) besteht auch die Möglichkeit, nur die seitlichen Überstände der Polschuhe aus diesem Material zu fertigen (FIG 3), da sie hauptsächlich Austrittspunkte für Streuflusslinien sind. Weiterhin ist eine Aufteilung der Nuten 14 mit awM möglich (FIG 5). Auch dadurch kann die Streuung (hier in der Nut) reduziert werden. Für die Ausführung der Polschuhe aus awM bietet es sich an, die Anisotropie im Material so auszuführen, dass diese dem typischen Flussverlauf im Polschuh angepasst ist.

Insgesamt ist durch die Bespiele gezeigt, wie durch die Erfindung der Streufluss aus Polschuhen einer elektrisch erregten Synchronmaschine durch den Einsatz eines anisotropen weichmagnetischen Materials verringert werden kann.

## Patentansprüche

1. Aktivteil (10) für eine elektrische Maschine (E), wobei das Aktivteil (10) als Stator (S) oder Läufer (10) ausgestaltet ist und zumindest zwei Nuten (14) zum Anordnen von elektrischen Spulenwicklungen (16) und zwischen benachbarten Nuten (14) jeweils einen Steg (22) aufweist, wobei an dem Steg (22) ein Polschuh (24) zum Führen eines magnetischen Flusses (30) zwischen dem Steg (22) und einem Luftspalt (L) der elektrischen Maschine (E) angeordnet ist, **dadurch gekennzeichnet, dass** der Polschuh (24) zum Führen des magnetischen Flusses (30) ein Material (34) aufweist, das zumindest bereichsweise eine magnetische Anisotropie mit einer leichten Achse (38) und einer schweren Achse der Magnetisierbarkeit aufweist, und die leichte Achse (38) parallel oder zumindest in einem Winkel von weniger als 25° zu einer Spulenachse (M) der Spulenwicklungen (16) ausgerichtet ist.

2. Aktivteil (10) nach Anspruch 1, wobei die schwere Achse senkrecht zur leichten Achse (38) ausgerichtet ist.

3. Aktivteil (10) nach einem der vorhergehenden Ansprüche, wobei das Aktivteil (10) als Stator oder Rotor (10) einer Rotationsmaschine ausgestaltet ist.

4. Aktivteil (10) nach einem der vorhergehenden Ansprüche, wobei der Polschuh (24) zwei Überstände (36) aufweist, von denen jeder eine der Nuten (14) überragt, und das Material (34) vollständig oder zumindest anteilig in den Überständen (36) angeordnet ist.

5. Aktivteil (10) nach einem der vorhergehenden Ansprüche, wobei das Material (34) im ganzen Polschuh (24) verteilt angeordnet ist.

6. Aktivteil (10) nach einem der vorhergehenden Ansprüche, wobei durch den Steg (22) eine jeweilige Nutenwand (40) jeder der Nuten (14) gebildet ist und ein Teil des Materials (34) in jeder Nutenwand (40) angeordnet ist.

7. Aktivteil (10) nach einem der vorhergehenden Ansprüche, wobei durch den Steg (22) und den Polschuh (24) ein Schenkelpol (12) einer Außenpolmaschine oder einer Innenpolmaschine gebildet ist.

8. Aktivteil (10) nach einem der vorhergehenden Ansprüche, wobei das Material (34) nur eine leichte Achse (38) aufweist.

9. Aktivteil (10) nach einem der vorhergehenden Ansprüche, wobei das Material (34) Neodym-Eisen-Bor, NdFeB, aufweist.

10. Elektrische Maschine (E) mit einem Stator (S) mit Magnetspulen (W) und mit einem Läufer, **dadurch gekennzeichnet, dass** der Stator (S) und/oder der Läufer (10) jeweils ein Aktivteil nach einem der vorhergehenden Ansprüche aufweist.

11. Elektrische Maschine (E) nach Anspruch 10, wobei die elektrische Maschine (E) dazu ausgelegt ist, mittels des jeweiligen Aktivteils und mittels in den Nuten (14) des Aktivteils angeordneten Spulenwicklungen (16) elektrisch eine magnetische Erregung in der Maschine (E) zu erzeugen.

12. Verfahren zum Herstellen eines Aktivteils (10) nach einem der Ansprüche 1 bis 9, mit den Schritten:
- Ausbilden von Nuten (14) zum Anordnen von Spulenwicklungen (16) und jeweils eines Stegs (22) zwischen benachbarten Nuten (14) und
- Anordnen jeweils eines Polschuhs (24) auf jedem Steg (22), **gekennzeichnet durch** den Schritt:
- in einem Material (34) jedes Polschuhs (24) jeweils Bereitstellen einer magnetischen Anisotropie, wobei bei jedem Polschuh (24) eine leichte Achse (24) der Anisotropie parallel oder zumindest in einem Winkel von weniger als 25° zu einer Spulenachse (M) der in den jeweils angrenzenden Nuten (14) anzuordnenden Spulenwicklungen (16) ausgerichtet wird.

13. Verfahren nach Anspruch 12, wobei zum Ausrichten der leichten Achse (38) der Polschuh (24) oder zumindest zwei Überstände (36) des Pohlschuhs (24) aus einem Rohling, der eine vorbestimmte magnetische Anisotropie aufweist, gebildet wird.

14. Verfahren nach Anspruch 12 oder 13, wobei zum Ausrichten der leichten Achse (38) die Anisotropie in das Material (34) von außen magnetisch eingeprägt wird.

15. Verfahren nach einem der Ansprüche 12 bis 14, wobei der Polschuh (24) oder zumindest zwei Überstände (36) des Pohlschuhs (24) durch Pressen eines Pulvers und/oder Granulats, welches jeweils das Material (34) enthält, und gleichzeitiges Beaufschlagen mit einem Magnetfeld ausgebildet wird.
